# EUROPÄISCHE PATENTSCHRIFT

(11) **EP 1 991 790 B1**
(45) Veröffentlichungstag und Bekanntmachung des Hinweises auf die Patenterteilung: **28.04.2010**
(21) Anmeldenummer: 07702979.1
(22) Anmeldetag: 24.01.2007
(51) Int. Cl.: F15B 11/068, F15B 13/00, F16K 17/08, F16K 27/00

(54) **VENTILEINRICHTUNG MIT SOFTSTARTFUNKTION**
VALVE DEVICE HAVING A SOFT START FUNCTION
ENSEMBLE DISTRIBUTEUR À FONCTION DE MISE EN PRESSION PROGRESSIVE

(30) Priorität: 09.03.2006 DE 102006010845
(43) Veröffentlichungstag der Anmeldung: 19.11.2008
(73) Patentinhaber: FESTO AG & Co. KG, 73734 Esslingen (DE)
(72) Erfinder: BOGDANOWICZ, Grzegorz, 73760 Ostfildern (DE); BRENNER, Jakob, 73730 Esslingen (DE)
(74) Vertreter: Abel, Martin
(86) Internationale Anmeldenummer: PCT/EP2007/000570
(87) Internationale Veröffentlichungsnummer: WO 2007/101503

(56) Entgegenhaltungen:
- EP-A1- 0 341 530
- DE-U1-202004 015 468
- US-A- 5 038 813

## Beschreibung

Die Erfindung betrifft eine Ventileinrichtung mit Softstartfunktion, mit einem Softstartventil, das über Hauptventilmittel verfügt, die in der Lage sind, die Verbindung zwischen einem mit einem Primärdruck beaufschlagten Primärkanal und einem Sekundärkanal wahlweise in einer durch eine Vorspannkraft vorgespannten Schließstellung abzusperren oder in einer Offenstellung freizugeben, wobei die Hauptventilmittel zum Umschalten in die Offenstellung mit einem Softstartdruck beaufschlagbar sind, wobei das Softstartventil ferner in der Lage ist, den Sekundärkanal bei abgetrenntem Primärkanal mit einem auf Grund von Drosselmitteln mit dem gegenüber dem Primärdruck zumindest anfänglich geringeren Softstartdruck beaufschlagten oder beaufschlagbaren Softstartkanal zu verbinden, und wobei die Hauptventilmittel einen in mehreren Stellungen positionierbaren Steuerschieber enthalten, der in der Lage ist, die Verbindung des Sekundärkanals mit sowohl dem Softstartkanal als auch dem Primärkanal zu steuern.

Eine aus der DE 91 05 458 U1 bekannte Ventileinrichtung enthält ein Softstartventil mit von einem 2/2-Wegeventil gebildeten Hauptventilmitteln, die fluidisch und durch Federkraft in eine Schließstellung vorgespannt sind, in der sie den Primärkanal vom Sekundärkanal absperren. Zusätzlich zu diesen Hauptventilmitteln ist ein 3/2-Wegeventil vorhanden, das in der Lage ist, den Sekundärkanal unter Überbrückung des 2/2-Wegeventils mit einem Softstartkanal zu verbinden, in dem auf Grund einer zugeordneten Drosseleinrichtung ein als Softstartdruck bezeichneter geringerer Druck wie im Primärkanal herrschen kann. Der Softstartdruck wird bei Betätigung des 3/2-Wegeventils nicht nur dem Sekundärkanal zugeführt, sondern gleichzeitig auch den Hauptventilmitteln aufgeschaltet, die dadurch in Richtung ihrer Offenstellung beaufschlagt werden. Bei Betätigung des 3/2-Wegeventils wird somit der Sekundärkanal mit unter dem Softstartdruck stehendem Druckmedium gespeist, wobei auf Grund des hierbei allmählich steigenden Softstartdruckes nach einer gewissen Zeitspanne die Hauptventilmittel in die Offenstellung geschaltet werden, sodass der Sekundärkanal mit vollem Durchfluss aus dem Primärkanal versorgt wird.

Eine vergleichbar arbeitende Ventileinrichtung geht aus der DE 20 2004 015 468 U1 hervor. Auch dort enthält das Softstartventil zwei gesonderte Ventileinheiten zur Realisierung der Softstartfunktion.

Aus der DE 1 283 627 B ist ein Steuerventil bekannt, das zur Vermeidung von Steuerungsschlägen eine allmähliche Fluidbeaufschlagung von Arbeitskanälen hervorruft, die mit einem Verbraucher verbunden sind. Hierzu wird der Steuerschieber zu einer Umschaltbewegung mit ungleichförmiger Geschwindigkeit angetrieben, wobei durch zugeordnete Drosselschlitze erreicht wird, dass bei gewissen Übergangsstellungen des Steuerschiebers eine nur gedrosselte Fluidbeaufschlagung der Arbeitskanäle stattfindet.

Die US-A-5 038 813 offenbart eine Ventileinrichtung der eingangs genannten Art, bei der ein pneumatisches Ventil ein Ventilglied aufweist, das einen Sekundärkanal wahlweise mit einem Softstartkanal oder einem Primärkanal verbinden kann und dessen Schaltstellung durch den im Softstartkanal herrschenden Softstartdruck beeinflusst wird, der einem die Fluidbeaufschlagung des Ventilgliedes steuernden zusätzlichen Ventil zugeleitet wird.

Die vorliegende Erfindung hat sich zur Aufgabe gestellt, eine Ventileinrichtung zu schaffen, die eine kostengünstige und kompakt bauende Softstartfunktion beinhaltet.

Zur Lösung dieser Aufgabe ist vorgesehen, dass der Steuerschieber mit einer von dem Softstartdruck entgegengesetzt zu der ebenfalls auf ihn einwirkenden Vorspannkraft beaufschlagbaren Betätigungsfläche bewegungsgekoppelt ist, und dass der Steuerschieber in einer Entlüftungsstellung positionierbar ist, in der er den Sekundärkanal, bei gleichzeitiger Abtrennung vom Primärkanal und vom Softstartkanal, mit einem mit der Atmosphäre kommunizierenden Entlüftungskanal verbindet.

Somit übernehmen die Hauptventilmittel allein die Ansteuerung des Sekundärkanals mit einem allmählich ansteigenden Druckniveau. Ein einziger Steuerschieber der Hauptventilmittel ist in der Lage, die Verbindung des Sekundärkanals mit sowohl dem Softstartkanal als auch dem Primärkanal zu steuern und somit in einer als Softstartstellung bezeichenbaren Stellung einen gedrosselten Durchsatz zu ermöglichen und in einer als Arbeitsstellung bezeichenbaren Stellung den unter Primärdruck stehenden vollen Durchsatz zu gewährleisten. Umgeschaltet wird der Steuerschieber durch den ihm unter Vermittlung einer Betätigungsfläche aufgeschalteten Softstartdruck, der im Betrieb auf Grund der allmählichen Füllung des Sekundärkanals allmählich ansteigt, bis er ein das Umschalten in die Arbeitsstellung hervorrufendes Niveau erreicht hat. Ein besonderer Vorteil resultiert daraus, dass der Steuerschieber zusätzlich zu der Softstartstellung und der Arbeitsstellung auch noch in einer Entlüftungsstellung positionierbar ist, in der er den Sekundärkanal mit einem mit der Atmosphäre kommunizierenden Entlüftungskanal verbindet. In dieser Entlüftungsstellung liegt bezüglich dem Primärkanal eine Schließstellung vor, indem dieser durch den Steuerschieber sowohl vom Sekundärkanal als auch vom Softstartkanal abgetrennt ist. Somit kann durch das Softstartventil bei Bedarf eine einfache Entlüftung des Sekundärkanals und eines daran eventuell angeschlossenen Verbrauchers vorgenommen werden.

Durch die Konzentration der für die Softstartfunktion maßgeblich verantwortlichen Ventilmittel in einer einzigen Ventileinheit kann das Softstartventil äußerst kompakt und kostengünstig realisiert werden. Es eröffnet sich zudem die Möglichkeit, das Softstartventil so zu gestalten, dass es sich in eine mit mehreren Steuerventilen ausgestattete Ventilbatterie integrieren lässt, insbesondere durch die Installation an einer Bestückungsfläche eines Fluidverteilers an Stelle eines Steuerventils oder neben einem solchen. Bei Bedarf kann man sogar das Ventilgehäuse eines Steuerventils für den Aufbau des Softstartventils heranziehen, sodass die einzelnen Bauteile mehrfach verwendbar sind, was die Kosten für Fertigung und Lagerhaltung weiter reduziert.

Vorteilhafte Weiterbildungen der Erfindung gehen aus den Unteransprüchen hervor.

Die Ventileinrichtung kann so ausgelegt werden, dass der Steuerschieber in einer Arbeitsstellung nicht nur den Primärkanal, sondern weiterhin auch den Softstartkanal mit dem Sekundärkanal verbindet. Der Softstartkanal muss also nicht abgetrennt werden, sondern kann parallel zum Primärkanal mit dem Sekundärkanal kommunizieren. Dies vereinfacht in der Regel die konstruktive Auslegung des Softstartventils.

Die Entlüftung findet vorzugsweise durch den Steuerschieber hindurch statt. Dieser verfügt zu diesem Zweck über einen in der Entlüftungsstellung mit zum einen dem Sekundärkanal und zum anderen dem Entlüftungskanal kommunizierenden Übertrittskanal.

Der Durchgang durch den Übertrittskanal ist zweckmäßigerweise nochmals gesondert durch ein im Steuerschieber angeordnetes Ventilglied gesteuert. Dieses kann den Übertrittskanal versperren, wenn der Steuerschieber eine Stellung einnimmt, in der ein Fluidaustritt unerwünscht ist.

Das Ventilglied kann kolbenartig ausgeführt sein und in der Schließstellung an einem bevorzugt von einem zugeordneten Ventilsitz gebildeten Anschlag anliegen, sodass es eine Stellkraft auf den Steuerschieber ausüben kann, wenn es zu Zwecken des Umschaltens des Steuerschiebers rückseitig mit einem Steuerdruck beaufschlagt wird.

Die für den zumindest anfänglich reduzierten Softstartdruck verantwortlichen Drosselmittel sind in der Drosselungsintensität zweckmäßigerweise einstellbar ausgeführt. Sie können ein unmittelbarer Bestandteil des Softstartventils sein oder sich in einem dem Softstartkanal des Softstartventils vorgeschalteten Kanal einer weiteren Komponente der Ventileinrichtung befinden, beispielsweise in einem Fluidverteiler, wenn das Softstartventil an oder in einem solchen angebaut bzw. eingebaut ist.

Die bevorzugt unmittelbar am Steuerschieber angeordnete Betätigungsfläche kann im Ventilgehäuse des Softstartventils einen mit dem Softstartdruck beaufschlagbaren Betätigungsraum begrenzen. Zugeführt wird dem Betätigungsraum der Softstartdruck vorzugsweise über mindestens einen zumindest abschnittsweise im Steuerschieber verlaufenden Steuerkanal, der sowohl in der Softstartstellung als auch in der Arbeitssteglung mit dem Softstartkanal oder dem unter dem gleichen Druck stehenden Sekundärkanal verbunden ist. Dadurch ist eine ständige Aufrechterhaltung einer den Steuerschieber entgegen der Vorspannkraft beaufschlagenden Stellkraft gewährleistet.

Der Betätigungsraum befindet sich zweckmäßigerweise zwischen der dem Steuerschieber zugeordneten Betätigungsfläche und einem dieser gegenüberliegenden Anschlagkolben, der relativ zum Steuerschieber und auch relativ zum Ventilgehäuse verstellbar ist. Er begrenzt durch das Zusammenwirken mit dem Ventilgehäuse den Hubweg des Steuerschiebers zur Vorgabe der Softstartstellung. Bei anschließender Erhöhung des dem Betätigungsraum aufgeschalteten Softstartdruckes behält er seine bezüglich dem Ventilgehäuse ortsfeste Position bei und ermöglicht ein Verstellen des Steuerschiebers, bis durch zugeordnete Anschlagmittel eine Hubbegrenzung stattfindet, die die Arbeitsstellung des Steuerschiebers vorgibt.

Nachfolgend wird die Erfindung anhand der beiliegend Zeichnung näher erläutert. In dieser zeigen:
- Figur 1: in perspektivischer Darstellung eine bevorzugte Ausführungsform der mit einem Softstartventil aus- gestatteten erfindungsgemäßen Ventileinrichtung,
- Figur 2: die Ventileinrichtung aus Figur 1 im Bereich des Softstartventils im Querschnitt gemäß Schnittlinie II-II,
- Figur 3: das bei der Anordnung gemäß Figuren 1 und 2 einge- setzte Softstartventil in einer vergrößerten Ein- zeldarstellung im Längsschnitt unter Einnahme der Entlüftungsstellung,
- Figur 4: das Softstartventil aus Figur 3 unter Einnahme der Softstartstellung, und
- Figur 5: das Softstartventil der Figuren 3 und 4 unter Ein- nahme der Arbeitsstellung.

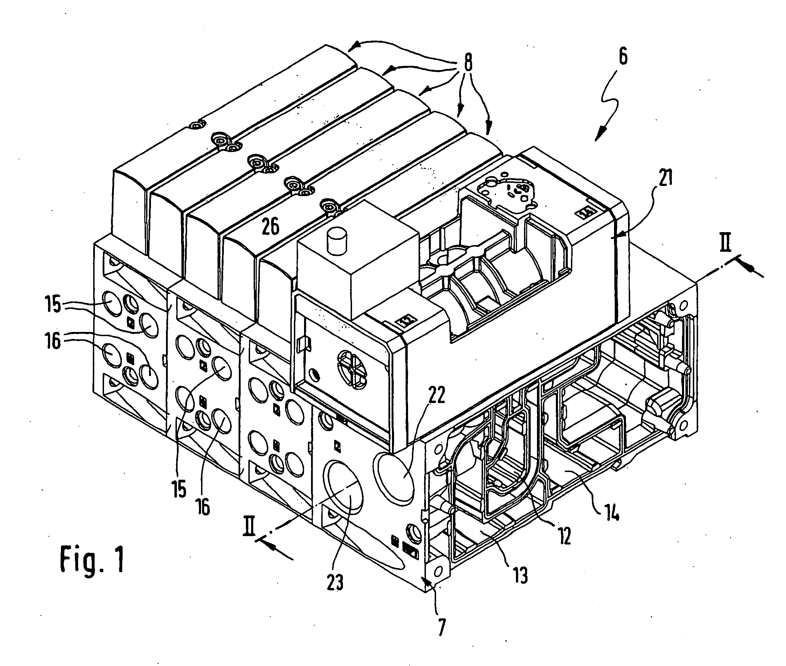

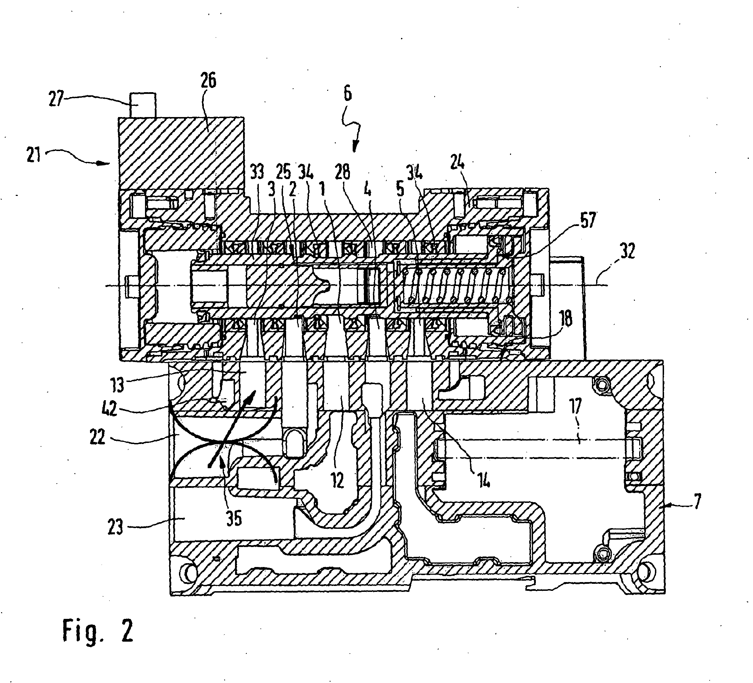

Die aus Figuren 1 und 2 ersichtliche Ventileinrichtung 6 ist als Ventilbatterie ausgebildet, die einen einstückigen oder, beispielsgemäß, modularen Fluidverteiler 7 enthält, der mit einer Mehrzahl von elektrisch betätigbaren Steuerventilen 8 bestückt ist.

Die Steuerventile 8 sitzen auf in der Zeichnung von ihnen abgedeckten Bestückungsflächen, an denen im Fluidverteiler 2 verlaufende Kanäle ausmünden, die mit den Ventilkanälen der Steuerventile 3 in an sich bekannter Weise verbunden sind.

Die im Fluidverteiler 7 verlaufenden Kanäle enthalten einen in Längsrichtung verlaufenden Verteiler-Speisekanal 12 sowie zwei dazu parallele erste bzw. zweite Verteiler-Entlüftungskanäle 13, 14. Diese Kanäle 12, 13, 14 stehen mit jedem der Steuerventile 8 in Fluidverbindung.

Von jedem Bestückungsplatz gehen außerdem ein erster und zweiter Verteiler-Arbeitskanal 15, 16 ab, an die nicht näher dargestellte Verbraucher anschließbar sind, beispielsweise zu betätigende Druckmittelantriebe. Die Fluidbeaufschlagung der Verteiler-Arbeitskanäle 15, 16 wird von den Steuerventilen 8 vorgegeben, die über eine nur schematisch angedeutete, im Fluidverteiler 7 verlaufende elektrische Signalübertragungseinrichtung 17 elektrisch ansteuerbar sind.

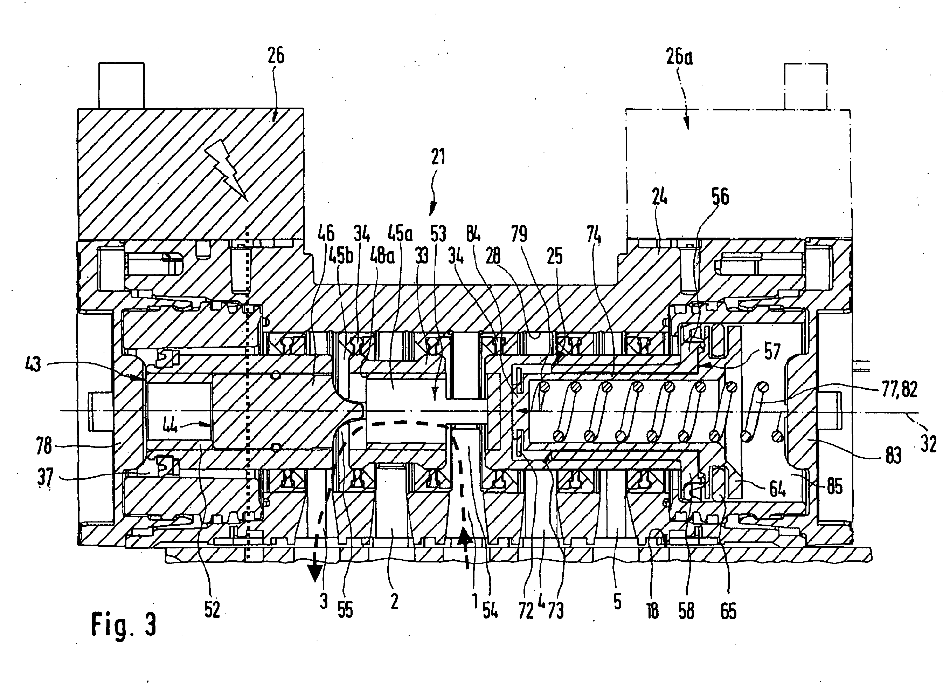

Der Fluidverteiler 7 ist auch mit einem Softstartventil 21 ausgestattet. Dessen bevorzugter Aufbau ist vor allem aus Figuren 3 bis 5 gut ersichtlich. Es kann beispielsweise an einer Bestückungsfläche 18 außer am Fluidverteiler 7, bevorzugt lösbar, angebracht sein. Eine unmittelbare Integration in den Fluidverteiler 7 wäre jedoch ebenfalls möglich.

An der Bestückungsfläche 18 findet sich eine vergleichbare Konstellation von Mündungen der im Fluidverteiler 7 verlaufenden Kanäle, wie an den Bestückungsflächen für die Steuerventile 8. An der Bestückungsfläche 18 münden also der Verteiler-Speisekanal 12 und die beiden Verteiler-Entlüftungskanäle 13, 14 aus. An Stelle zweier Verteiler-Arbeitskanäle sind jedoch ein erster und zweiter Verteiler-Versorgungskanal 22, 23 vorhanden, die jedoch auch als Verteiler-Arbeitskanäle nutzbar sind, wenn an der Bestückungsfläche 18 an Stelle des Softstartventils 21 ein Steuerventil 8 installiert wird. Umgekehrt besteht ebenso die Möglichkeit, mindestens eine der mit einem Steuerventil 8 bestückten Bestückungsflächen alternativ zu einem Steuerventil 8 mit einem Softstartventil 21 zu bestücken, wobei dann die zugeordneten Verteiler-Arbeitskanäle 15, 16 als Verteiler-Versorgungskanäle 22, 23 genutzt werden. Dies setzt jedoch vergleichbare Schnittstellenabmessungen der Steuerventile 8 und des Softstartventils 21 voraus oder die Zwischenschaltung eines Adapters.

Mit Hilfe des Softstartventils 21 ist es möglich, bei Inbetriebnahme der Ventileinrichtung 6 einen langsamen, sanften Druckaufbau in dem die Steuerventile 8 versorgenden Verteiler-Speisekanal 12 hervorzurufen. Der Verteiler-Speisekanal 12 wird nicht in konventioneller Weise direkt über eine Anschlussöffnung von einer Außenfläche des Fluidverteilers 7 her mit Druckmedium versorgt, sondern über das Softstartventil 21 hinweg. Das Druckmedium, insbesondere Druckluft, ist gleichzeitig über die beiden Verteiler-Versorgungskanäle 22, 23 einspeisbar und stammt von einer nicht näher dargestellten Druckquelle, die beiden Kanälen 22, 23 ein unter einem Primärdruck stehendes Druckmedium zur Verfügung stellt.

Das Softstartventil 21 enthält ein Ventilgehäuse 24 mit darin befindlichen, in ihrer Gesamtheit mit Bezugsziffer 25 bezeichneten Hauptventilmitteln. Aktiviert werden die Hauptventilmittel 25 durch ein elektrisch betätigbares Vorsteuerventil 26, das an oder in das Ventilgehäuse 24 eingebaut ist und das über eine elektrische Schnittstelle 27 mit den erforderlichen elektrischen Betätigungssignalen versorgt werden kann. Abweichend von der beim Ausführungsbeispiel vorgesehenen, von der elektrischen Signalübertragungseinrichtung 17 unabhängigen elektrischen Versorgung des Vorsteuerventils 26, kann dieses bei einer abgewandelten Ausführungsform auch an die elektrische Signalübertragungseinrichtung 17 angeschlossen sein.

Im Innern des Ventilgehäuses 24 befindet sich eine Schieberaufnahme 28 mit einem darin in Richtung seiner Längsachse 32 verschiebbaren Steuerschieber 33. Der Steuerschieber 33 hat eine besondere Gestaltung, die dadurch besser zum Ausdruck kommt, dass er in den Figuren 3 bis 5 in unterschiedlichen Schnittebenen geschnitten dargestellt ist.

Durch Abdichtmittel 34, die beispielhaft aus mehreren mit axialem Abstand zueinander angeordneten ringförmigen Dichtelementen bestehen, welche den Steuerschieber 33 koaxial umschließen und die gehäusefest fixiert sind, wird die Schieberaufnahme 28 in eine Mehrzahl axial aufeinanderfolgender Abschnitte unterteilt, die zu Kanälen gehören, welche so an der Außenfläche des Ventilgehäuses 24 ausmünden, dass sie zuordnungsrichtig mit den an der Bestückungsfläche vorgesehenen Mündungen der Verteilerkanäle kommunizieren. Im Einzelnen handelt es sich um einen mit dem Verteiler-Speisekanal 12 kommunizierenden Sekundärkanal 1, um einen mit dem ersten Verteiler-Versorgungskanal 22 kommunizierenden Softstartkanal 2, um einen mit dem ersten Verteiler-Entlüftungskanal 13 kommunizierenden Entlüftungskanal 3 und um einen mit dem zweiten Verteiler-Versorgungskanal 23 kommunizierenden Primärkanal 4. Ein weiterer Kanal 5 steht mit dem zweiten Verteiler-Entlüftungskanal 14 in Verbindung, ist jedoch funktionslos. Er könnte auch entfallen.

Im Betrieb der Ventileinrichtung 6 liegt der in den zweiten Verteiler-Versorgungskanal 23 eingespeiste Primärdruck in unveränderter Höhe konstant auch im Primärkanal 4 des Softstartventils 21 an. Der im Softstartkanal 2 herrschende Druck hingegen ist variabel und wird von Drosselmitteln 35 beeinflusst, die zweckmäßigerweise in den Verlauf des ersten Verteiler-Versorgungskanals 22 im Fluidverteiler 7 eingebaut sind. Sie sind in Figur 2 lediglich schematisch abgebildet, wobei zu erwähnen ist, dass die Drosselmittel 35 bevorzugt einstellbar ausgebildet sind, sodass sich die von ihnen hervorgerufene Drosselungsintensität variabel vorgeben lässt. Durch die Drosselmittel 35 wird das über den ersten Verteiler-Versorgungskanal 22 zuströmende Druckmedium vom ursprünglichen Primärdruck auf einen diesbezüglich niedrigeren Softstartdruck abgesenkt, in Verbindung mit einem reduzierten Durchfluss.

In nicht näher dargestellter Weise könnten die Drosselmittel auch direkt in das Softstartventil 21 eingebaut sein. Ferner wäre es möglich, eine gesonderte Drosseleinrichtung vorzusehen, die dem ersten Verteiler-Versorgungskanal 22 vorgeschaltet ist oder die zwischen dem Softstartventil 21 und dem Fluidverteiler 7 platziert ist.

Im Betrieb der Ventileinrichtung 6 ist der einzige Steuerschieber 33 der Hauptventilmittel 25 stellungsabhängig in der Lage, die Verbindung des Sekundärkanals 1 mit sowohl dem Softstartkanal 2 als auch dem Primärkanal 4 und vorzugsweise auch mit dem Entlüftungskanal 3 zu steuern. Dies ermöglicht einen relativ einfachen und zugleich kompakten Aufbau des Softstartventils 21. Wesentliche Details hierzu werden nachfolgend vor allem unter Bezugnahme auf die Figuren 3 bis 5 erläutert.

Der insgesamt längliche Steuerschieber 33 hat bevorzugt eine zylindrische, in Längsrichtung mehrfach abgestufte Außenkontur und ragt mit einem stirnseitigen Endabschnitt 36 in eine im Innern des Ventilgehäuses 24 ausgebildete Vorsteuerkammer 37 hinein. Diese ist über das zugeordnete Vorsteuerventil 26 in an sich bekannter Weise mit unter einem Vorsteuerdruck stehendem Steuerdruckmedium beaufschlagbar oder an die Atmosphäre entlüftbar. Ein in die Vorsteuerkammer 37 einmündender Vorsteuerkanal 38, der von dem insbesondere als Magnetventil ausgebildeten, elektrisch betätigbaren Vorsteuerventil 26 beherrscht wird, ist in der Zeichnung gepunktet abgebildet. Er kommuniziert einlassseitig mit einem im Fluidverteiler 7 verlaufenden Verteiler-Vorsteuerkanal 42 oder auch direkt im Innern des Softstartventils 21 mit dem Primärkanal 4.

Der in der Vorsteuerkammer 37 herrschende Druck beaufschlagt die zugeordnete Stirnfläche 43 des Steuerschiebers 33 sowie gleichzeitig die Bodenfläche 44 eines in einem länglichen Hohlraum 45 des Steuerschiebers 33 in Richtung der Längsachse des Steuerschiebers 33 verschiebbar geführten und vorzugsweise kolbenförmig ausgebildeten Ventilgliedes 46.

Zur Bildung des Hohlraumes 45 ist der Steuerschieber 37 zumindest partiell rohrförmig ausgebildet, wobei der Hohlraum 45 zur Stirnfläche 43 hin offen ist und die Bodenfläche 44 in Richtung der Stirnfläche 43 weist. Das Ventilglied 46 ist somit ständig dem in der Vorsteuerkammer 37 herrschenden Druck ausgesetzt. Eine am Außenumfang des Ventilgliedes 46 angeordnete ringförmige Dichtung 47 verhindert ein Vorbeiströmen von Druckmedium zwischen dem Ventilglied 46 und der Wandung des Steuerschiebers 33.

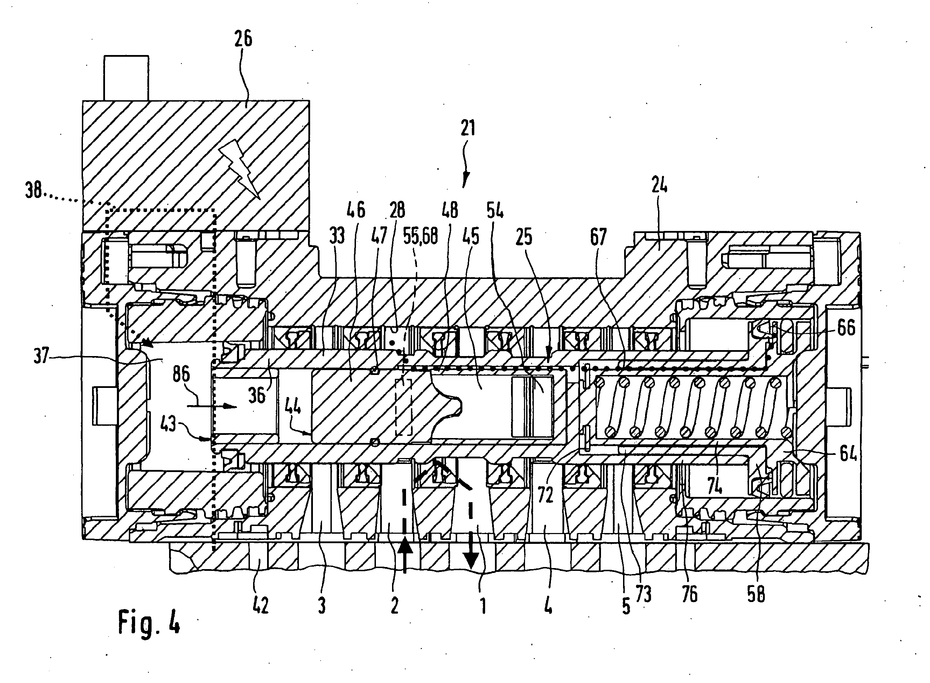

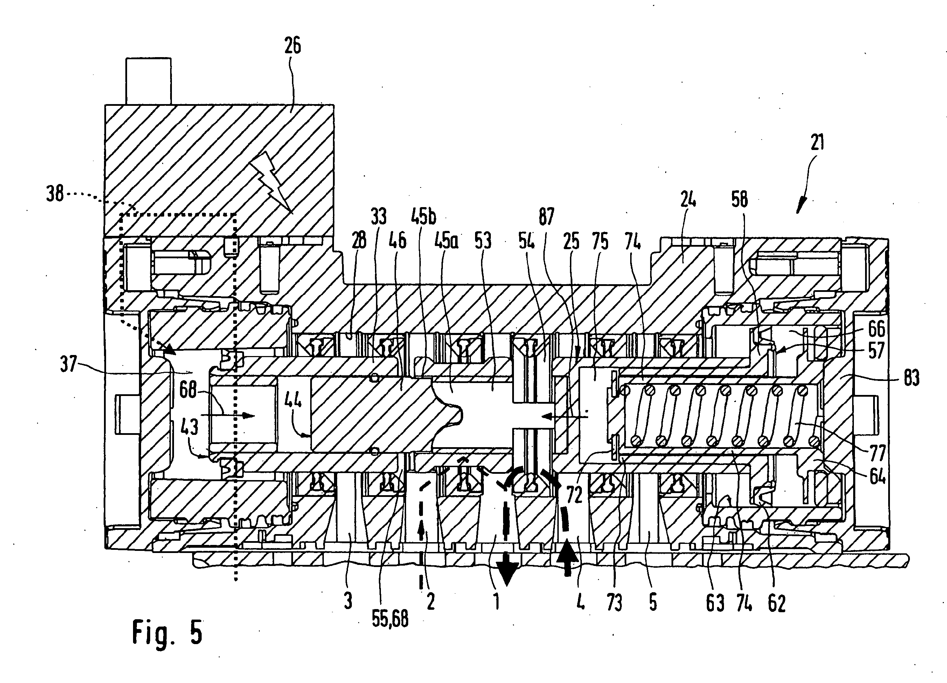

Das Ventilglied 46 ist innerhalb des Hohlraumes 45 zwischen einer aus Figur 3 hervorgehenden Offenstellung und einer aus Figuren 4 und 5 hervorgehenden Schließstellung in der Richtung der Längsachse 32 relativ zum Steuerschieber 33 verschiebbar. In der Schließstellung nimmt es eine von der Stirnfläche 43 weiter entfernte Position ein, die dadurch vorgegeben ist, dass es an einem im Hohlraum 45 befindlichen, bevorzugt ringförmigen Anschlag 48 zur Anlage gelangt. Die Offenstellung wird durch einen weiteren Anschlag 52 definiert, der der Bodenfläche 44 axial gegenüber liegt und beispielsweise von einer stirnseitig in den Hohlraum 45 eingesetzten Hülse gebildet wird.

Bei dem Ventilglied 46 handelt es sich zweckmäßigerweise um ein Sitzventilglied. Der ringförmige Anschlag 48 bildet hierbei einen mit der der Bodenfläche 44 entgegengesetzten Stirnfläche des Ventilgliedes 46 kooperierenden ringförmigen Ventilsitz 48a, durch den der Hohlraum 45 in einen axial diesseits und jenseits des Ventilsitzes 48a liegenden Hohlraumabschnitt 45a, 45b unterteilt ist. Je nach Stellung des Ventilgliedes 46 ist die Verbindung zwischen den beiden Hohlraumabschnitten 45a, 45b offen oder geschlossen.

Die beiden Hohlraumabschnitte 45a, 45b bilden die Kanalabschnitte eines im Steuerschieber 33 verlaufenden Übertrittskanals 53, der mit mindestens einer Eintrittsöffnung 54 und mindestens einer Austrittsöffnung 55 an axial beabstandeten Stellen zur peripheren Außenfläche des Steuerschiebers 33 ausmündet. Die Austrittsöffnung 55 liegt auf der dem Ventilglied 46 zugewandten Seite des Ventilsitzes 48a, die Eintrittsöffnung 54 jenseits des Ventilsitzes 48a.

An seinem dem oben erwähnten stirnseitigen Endabschnitt 36 entgegengesetzten zweiten stirnseitigen Endabschnitt 56 ist der Steuerschieber 33 mit einer axial entgegengesetzt zu der Stirnfläche 43 orientierten Betätigungsfläche 57 versehen. Sie ist zweckmäßigerweise ringförmig gestaltet und kann insbesondere unmittelbar am Steuerschieber 33 ausgebildet sein.

Bevorzugt findet sich die Betätigungsfläche 57 an einem kolbenartigen Betätigungsabschnitt 58, der unter von Dichtmitteln 62 hervorgerufener peripherer Abdichtung in einer im Ventilgehäuse 24 ausgebildeten, bevorzugt zylindrischen Kolbenaufnahme 63 verschiebbar gelagert ist.

Der Betätigungsfläche 57 axial gegenüberliegend und mithin dem zweiten stirnseitigen Endabschnitt 56 des Steuerschiebers 33 axial vorgelagert ist in der Kolbenaufnahme 63 ein bezüglich dem Steuerschieber 33 separater Anschlagkolben 64 angeordnet. Auch er ist durch Dichtmittel 65 zur peripheren Wandung der Kolbenaufnahme 63 abgedichtet, sodass er zusammen mit dem Betätigungsabschnitt 58 einen abgedichteten Betätigungsraum 66 begrenzt.

Der Anschlagkolben 64 ist sowohl bezüglich dem Steuerschieber 33 als auch bezüglich dem Ventilgehäuse 24 in der Achsrichtung des Steuerschiebers 33 verschiebbar. Bei der Relativbewegung zwischen dem Anschlagkolben 46 und dem Steuerschieber 33 ändert sich das Volumen des eingeschlossenen Betätigungsraumes 66.

Der Betätigungsraum 66 und mithin die Betätigungsfläche 57 ist mit dem im Betrieb der Ventileinrichtung 6 momentan im Softstartkanal herrschenden Softstartdruck beaufschlagbar und insbesondere ständig beaufschlagt. Dies geschieht über einen in Figur 4 durch eine gepunktete Linie verdeutlichten Steuerkanal 67, der abschnittsweise im Steuerschieber 33 verläuft und über mindestens eine Steuerdruck-Abgriffsöffnung 68 zur Außenumfangsfläche des Steuerschiebers 33 ausmündet. Zweckmäßigerweise wird die Steuerdruckarbeitsöffnung 68 gleichzeitig von der Austrittsöffnung 55 gebildet. Jedenfalls ist sie so am Steuerschieber 33 positioniert, dass sie bei noch zu erläuternden Schaltstellungen des Steuerschiebers 33 mit dem Softstartkanal 2 oder dem Sekundärkanal 1 in Verbindung steht. Auf diese Weise herrscht im Betätigungsraum 66 der gleiche Druck wie im Softstartkanal 2 bzw. im Sekundärkanal 1.

Durch Anschlagmittel 72, 73 wird die relative Ausfahrbewegung zwischen dem Steuerschieber 33 und dem Anschlagkolben 46 hubmäßig begrenzt. Bewegen sich die beiden Komponenten axial voneinander weg, treffen nach einer gewissen relativen Wegstrecke die zum einen am Anschlagkolben 46 und zum anderen am Steuerschieber 33 angeordneten Anschlagmittel 72, 73 aufeinander und unterbinden eine weitere Relativbewegung im Sinne eines sich axial voneinander Entfernens.

Die kolbenseitigen Anschlagmittel 72, beispielsweise in Gestalt einer Anschlagscheibe, befinden sich beim Ausführungsbeispiel am stirnseitigen Endabschnitt eines bevorzugt zylindrischen Kolbenfortsatzes 74 des Anschlagkolbens 64, der zum Steuerschieber 33 ragt und in eine zum Betätigungsraum 66 hin offene Steuerschieberausnehmung 75 verschiebbar geführt eintaucht. Die steuerschieberseitigen Anschlagmittel 73 sind beispielhaft von der Stirnfläche einer in die Steuerschieberausnehmung 75 eingesetzten und insbesondere eingepressten Anschlaghülse 76 gebildet, die ein fester Bestandteil des Steuerschiebers 33 ist und die beim Ausführungsbeispiel auch den Betätigungsabschnitt 58 trägt.

Durch Beaufschlagungsmittel 77 kann der Steuerschieber 33 in einer aus Figur 3 ersichtlichen Entlüftungsstellung positioniert werden. Er nimmt dabei seine weitest möglich in Richtung der Vorsteuerkammer 37 verlagerte Stellung ein. Vorgegeben wird die Entlüftungsstellung beispielsweise dadurch, dass der Steuerschieber 33 mit seiner der Vorsteuerkammer 37 zugeordneten Stirnfläche 43 an einer die Vorsteuerkammer 37 axial begrenzenden ventilgehäusefesten Abschlusswand 78 zur Anlage gelangt.

Die Beaufschlagungsmittel 77 sind in der Lage, eine durch einen Pfeil angedeutete Beaufschlagungskraft 79 auf den Steuerschieber 33 auszuüben. Dies geschieht jedoch nicht unmittelbar, sondern mittelbar unter Zwischenschaltung des Anschlagkolbens 64. Auf diesen wirken die Beaufschlagungsmittel 77 ein, der die Beaufschlagungskraft 79 durch axiale Anlage am Steuerschieber 33 auf diesen überträgt. Hierbei nehmen Anschlagkolben 64 und Steuerschieber 33 die weitest möglich aneinander angenäherte Stellung ein. Der Anschlagkolben 64 kann hierbei insbesondere unmittelbar an der Betätigungsfläche 57 anliegen. Gleichzeitig ist der Kolbenfortsatz 74 weitest möglich in die Steuerschieberausnehmung 75 eingetaucht. Alternativ oder zusätzlich kann die Kraftübertragung zwischen dem Anschlagkolben 64 und dem Steuerschieber 33 auch dadurch erfolgen, dass der Kolbenfortsatz 74 stirnseitig an der ihm axial zugewandten Grundfläche der Steuerschieberausnehmung 75 anliegt.

Der besseren Unterscheidung wegen sei die vorgenannte Relativposition zwischen Anschlagkolben 64 und Steuerschieber 33 im Folgenden auch als einander maximal angenäherte Position bezeichnet.

Die Beaufschlagungsmittel 77 bestehen bei dem vorteilhaften Ausführungsbeispiel aus einer drückenden Federeinrichtung 82. Sie drückt den Anschlagkolben 64 und mithin den Steuerschieber 33 ständig in Richtung der Entlüftungsstellung. Bevorzugt taucht sie durch den Anschlagkolben 64 hindurch in den hohlen Kolbenfortsatz 74 ein, um sich einenends an dessen Bodenwand 84 und andernends an einer zweiten Abschlusswand 83 des Ventilgehäuses abzustützen. Die zweite Abschlusswand 83 liegt dem Anschlagkolben 64 auf der dem Betätigungsabschnitt 58 entgegengesetzten Axialseite gegenüber und begrenzt so einen die Beaufschlagungsmittel 77 aufnehmenden Beaufschlagungsraum 85.

Bei einer alternativen Ausführungsform entfällt die Federeinrichtung 82 und die Beaufschlagungsmittel 77 umfassen ein in Figur 3 nur schematisch strichpunktiert angedeutetes zweites Vorsteuerventil 26a, das in der Lage ist, den Beaufschlagungsraum 85 gesteuert mit Druckmedium zu beaufschlagen. Das eingespeiste Druckmedium wirkt dann vergleichbar der Federeinrichtung 82 auf den Anschlagkolben 64 und verschiebt somit den Steuerschieber 33 in die Entlüftungsstellung. Hierbei genügt ein Druckimpuls, wenn gleichzeitig die entgegengesetzte Vorsteuerkammer 37 entlüftet ist.

In der Entlüftungsstellung des Steuerschiebers 33 kann der Sekundärkanal 1 durch den Übertrittskanal 53 hindurch zum Entlüftungskanal 33 und somit zur Atmosphäre entlüftet werden. Dadurch wird der Sekundärkanal 1 drucklos und beim Ausführungsbeispiel der daran angeschlossene Verteiler-Speisekanal 12. Man kann auf diese Weise die gesamte Ventileinrichtung 6 drucklos schalten. Die Entlüftungsströmung ist in Figur 3 durch eine gestrichelte Linie angedeutet. Es ist offensichtlich, dass zur Gewährleistung der Entlüftungsfunktion der Übertrittskanal 53 so angeordnet ist, dass in der Entlüftungsstellung die Eintrittsöffnung 54 mit dem Sekundärkanal 1 und die Austrittsöffnung 55 mit dem Entlüftungskanal 3 kommuniziert.

Während der Entlüftungsphase nimmt das Ventilglied 46 die Offenstellung ein. Da die Vorsteuerkammer 37 entlüftet ist, ist der Sekundärdruck in der Lage, das Ventilglied 46 zu verschieben und vom Ventilsitz 48a abzuheben.

In der Entlüftungsstellung des Steuerschiebers 33 sind sowohl der Softstartkanal 2 als auch der Primärkanal 4 durch ein Zusammenwirken des Steuerschiebers 33 mit den Abdichtmitteln 34 abgesperrt.

Um das Softstartventil 21 zu aktivieren und einen allmählichen Druckaufbau im Sekundärkanal 1 herbeizuführen, wird durch Betätigung des Vorsteuerventils 26 in der Vorsteuerkammer 37 der Vorsteuerdruck angelegt. Dieser beaufschlagt den Steuerschieber 33 und verlagert ihn in Richtung zu der zweiten,Abschlusswand 83. Die wirksame Druckbeaufschlagungsfläche setzt sich hierbei aus der Stirnfläche 43 des Steuerschiebers 33 und der Bodenfläche 44 des Ventilglieds 46 zusammen. Letzteres deshalb, weil der Vorsteuerdruck das Ventilglied 46 bis zur Anlage an dem Anschlag 48 bzw. Ventilsitz 48a verschiebt und dadurch die auf das Ventilglied 46 einwirkende Druckkraft in den Steuerschieber 33 eingeleitet wird. Gut ersichtlich ist dieser Zustand aus Figur 4.

Bei dieser Umschaltbewegung schiebt der Steuerschieber 33 den Anschlagkolben 64 entgegen der Beaufschlagungskraft 79 vor sich her, bis der Anschlagkolben 64 an der zweiten Abschlusswand 83 anschlägt. Beim Ausführungsbeispiel ist dies mit einer Komprimierung der Federeinrichtung 82 verbunden. Steuerschieber 33 und Anschlagkolben 46 befinden sich dabei noch immer in der einander maximal angenäherten Position.

Die aus dieser Umschaltbewegung letztlich resultierende Stellung des Steuerschiebers 33 geht aus Figur 4 hervor und sei als Softstartstellung bezeichnet. Diese Softstartstellung zeichnet sich weiters dadurch aus, dass der Steuerschieber 33 eine fluidische Verbindung zwischen dem Softstartkanal 2 und dem Sekundärkanal 1 hergestellt hat. Somit strömt Druckmedium gemäß der in Figur 4 gestrichelten Linie aus dem Softstartkanal 2 in den Sekundärkanal 1 über und von letzterem beispielhaft in den Verteiler-Speisekanal 12 der Ventileinrichtung 6.

Ein weiteres Merkmal der Softstartstellung besteht darin, dass der Steuerschieber 33 bezüglich der Verbindung zwischen Sekundärkanal 1 und Primärkanal 4 eine Schließstellung einnimmt. Der Sekundärkanal 1 ist also vom Primärkanal 4 abgesperrt. Ebenfalls abgesperrt ist der Entlüftungskanal 3. Ein Übertritt von Druckmedium zwischen dem Softstartkanal 2 und dem Primärkanal 4 durch den Übertrittskanal 53 hindurch wird durch das auf Grund seiner Fluidbeaufschlagung in der Schließstellung gehaltene Ventilglied 46 verhindert.

Durch die Verbindung zwischen Softstartkanal 2 und Sekundärkanal 1 baut sich in letzterem allmählich ein zunehmend höherer Softstartdruck auf. Dieser kann theoretisch bis zum Primärdruck ansteigen, welcher stromauf den Drosselmitteln 35 herrscht. Durch die gewählte Einstellung der Drosselmittel 35 kann die Geschwindigkeit des Druckaufbaus variabel vorgegeben werden.

Über den Steuerkanal 67 wird der Softstartdruck in der Softstartstellung auch dem Betätigungsraum 66 zugeführt, was in Figur 4 anhand einer Strichpunktlinie angedeutet ist. Beim Ausführungsbeispiel geschieht der Druckabgriff über die im Bereich des Softstartkanals 2 positionierte Steuerdruck-Abgriffsöffnung 68. Alternativ wäre allerdings auch eine dahingehende Platzierung der Steuerdruck-Abgriffsöffnung 68 denkbar, dass diese in der Softstarstellung im Bereich des Sekundärkanals 1 zu liegen kommt. Die Position ist deshalb irrelevant, weil im Softstartkanal 2 und im Sekundärkanal 1 in der Softstartstellung praktisch der gleiche Druck herrscht:

Entsprechend dem Aufbau des Softstartdruckes erhöht sich auch der im Betätigungsraum 66 herrschende Betätigungsdruck. Bei einer vorbestimmten Höhe des Betätigungsdruckes schaltet der Steuerschieber 33 in die aus Figur 5 ersichtliche Arbeitsstellung um. Dies geschieht entgegen der weiterhin unverändert vorhandenen Vorspannkraft 86, mit der der Steuerschieber 33 durch das in der Vorsteuerkammer 37 befindliche Steuerdruckmedium beaufschlagt wird.

Der das Umschalten in die Arbeitsstellung letztlich verursachende Druckpegel des Sekundärkanals 1 lässt sich über die Flächenverhältnisse zwischen einerseits der Betätigungsfläche 57 und andererseits der Stirnfläche 43 und der Bodenfläche 44 vorgeben und auch über den sich ebenfalls auf die Vorspannkraft 86 auswirkenden Vorsteuerdruck. Beispielsweise kann die Umschaltschwelle bei einem Softstartdruck liegen, der halb so groß ist wie der Primärdruck. Man ist allerdings bei der Einstellung der für das Umschalten verantwortlichen Softstartdruckes völlig frei.

Die aus Figur 5 ersichtliche Arbeitsstellung des Steuerschiebers 33 zeichnet sich insbesondere dadurch aus, dass in der Verbindung zwischen dem Sekundärkanal 1 und dem Primärkanal 4 eine Offenstellung vorliegt. Mithin kann gemäß der in Figur 5 eingezeichneten gestrichelten Linie unter dem Primärdruck stehendes Druckmedium aus dem Primärkanal 4 in den Sekundärkanal 1 einströmen und darin den Druckaufbau bis zum gewünschten Arbeitsdruck vornehmen, der dem Primärdruck entspricht.

Die Arbeitsstellung des Steuerschiebers 33 liegt axial zwischen der Entlüftungsstellung und der Softstartstellung. Vorgegeben wird sie von den miteinander kooperierenden Anschlagmitteln 72, 73. Durch den sich im Betätigungsraum 66 aufbauenden Druck wird der Anschlagkolben 46 - gegenüber der Softstartstellung unverändert - in einer Anschlagposition gehalten, in der er sich an der zweiten Abschlusswand 83 gehäusefest abstützt. Somit führt der Betätigungsabschnitt 58 und mit diesem der gesamte Steuerschieber 33 eine Relativbewegung bezüglich dem Ventilgehäuse 24 und dem Anschlagkolben 64 aus, bei der er sich gemäß Pfeil 87 in Richtung der Entlüftungsstellung bewegt, vor deren Erreichen jedoch dadurch gestoppt wird, dass die beiden Anschlagmittel 72, 73 aufeinander auflaufen. Dadurch ist die Arbeitsstellung definiert.

Beim Ausführungsbeispiel ist die Geometrie des Steuerschiebers 33 so gewählt, dass der Sekundärkanal 1 in der Arbeitsstellung des Steuerschiebers 33 gemäß der in Figur 5 dünneren gestrichelten Linie auch mit dem Softstartkanal 2 in Verbindung steht. Dies ist jedoch nicht zwingend erforderlich.

Die Arbeitsstellung bleibt so lange erhalten, wie in der Vorsteuerkammer 37 der Vorsteuerdruck ansteht. Wird die Vorsteuerkammer 37 entlüftet, entfällt die Vorspannkraft 86 und der Steuerschieber 33 wird durch die Beaufschlagungsmittel 77 in die schon angesprochene Entlüftungsstellung der Figur 3 zurückgeschaltet.

Der für die Beaufschlagung der Betätigungsfläche 57 verantwortliche Steuerkanal 67 ist sowohl in der Softstartstellung als auch in der Arbeitsstellung und während des Überganges zwischen den beiden Stellungen mit dem Softstartkanal 2 verbunden, um den für das Umschalten in die Arbeitsstellung und die Beibehaltung der Arbeitsstellung erforderliche Druckbeaufschlagung der Betätigungsfläche 57 zu gewährleisten. Ein Vergleich der Figuren 4 und 5 macht hierbei deutlich, dass die Steuerdruck-Abgriffsöffnung 68 in jeder der vorgenannten Stellungen im Bereich des Softstartkanals 2 positioniert ist.

Zu dem Ausführungsbeispiel kann zusammenfassend nochmals festgehalten werden, dass das Softstartventil 21 einen mit einem Primärdruck beaufschlagten Primärkanal 4, einen Sekundärkanal 1 und einen aufgrund von Drosselmitteln 35 mit einem bezüglich dem Primärdruck gedrosselten Softstartdruck beaufschlagten Softstartkanal 2 enthält. Ferner verfügt es über Hauptventilmittel 25, durch die der Sekundärkanal 1 bei von ihm abgetrenntem Primärkanal 4 mit dem Softstartkanal 2 verbindbar ist und die einen in mehreren Stellungen positionierbaren Steuerschieber 33 enthalten, der entgegen einer Vorspannkraft 86 aus einer den Primärkanal 4 vom Sekundärkanal 1 abtrennenden Stellung in eine die Verbindung zwischen diesen Kanälen freigebende Arbeitsstellung umschaltbar ist, indem eine an ihm vorgesehene Betätigungsfläche 57 aus dem Softstartkanal 2 mit dem Softstartdruck beaufschlagt wird. Der Steuerschieber 33 steuert in Abhängigkeit von seiner Position die Verbindung des Sekundärkanals 1 mit sowohl dem Primärkanal 4 als auch dem Softstartkanal 2, wobei er in einer den Softstartkanal 2 mit dem gleichzeitig vom Primärkanal 4 abgetrennten Sekundärkanal 1 verbindenden Softstartstellung positionierbar ist, aus der er durch seitens des Softstartdruckes erfolgende Beaufschlagung der Betätigungsfläche 57 in die Arbeitsstellung umschaltbar ist.

Durch das in die Ventileinrichtung integrierte Softstartventil 21 ist eine gesteuerte Versorgung und Entlüftung der Ventileinrichtung 6 ohne Rückgriff auf externe Komponenten möglich. Da die Steuerung der Schaltstellungen unmittelbar durch die Druckbeaufschlagung hervorgerufen wird, werden keine elektrischen Drucksensoren benötigt. Die Umschaltfunktion des Softstartventils 21 kann zeit- und/oder druckabhängig ablaufen.

## Patentansprüche

1. Ventileinrichtung mit Softstartfunktion, mit einem Softstartventil (21) das über Hauptventilmittel (25) verfügt, die in der Lage sind, die Verbindung zwischen einem mit einem Primärdruck beaufschlagten Primärkanal (4) und einem Sekundärkanal (1) wahlweise in einer durch eine Vorspannkraft (86) vorgespannten Schließstellung abzusperren oder in einer Offenstellung freizugeben, wobei die Hauptventilmittel (25) zum Umschalten in die Offenstellung mit einem Softstartdruck beaufschlagbar sind und das Softstartventil (21) ferner in der Lage ist, den Sekundärkanal (1) bei abgetrenntem Primärkanal (4) mit einem auf Grund von Drosselmitteln (35) mit dem gegenüber dem Primärdruck zumindest anfänglich geringeren Softstartdruck beaufschlagten oder beaufschlagbaren Softstartkanal (2) zu verbinden, und wobei die Hauptventilmittel (25) einen in mehreren Stellungen positionierbaren Steuerschieber (33) enthalten, der in der Lage ist, die Verbindung des Sekundärkanals (1) mit sowohl dem Softstartkanal (2) als auch dem Primärkanal (4) zu steuern, **dadurch gekennzeichnet, dass** der Steuerschieber (33) mit einer von dem Softstartdruck entgegengesetzt zu der ebenfalls auf ihn einwirkenden Vorspannkraft (86) beaufschlagbaren Betätigungsfläche (57) bewegungsgekoppelt ist, und dass der Steuerschieber (33) in einer Entlüftungsstellung positionierbar ist, in der er den Sekundärkanal (1), bei gleichzeitiger Abtrennung vom Primärkanal (4) und vom Softstartkanal (2), mit einem mit der Atmosphäre kommunizierenden Entlüftungskanal (3) verbindet.

2. Ventileinrichtung nach Anspruch 1, **dadurch gekennzeichnet, dass** der Steuerschieber (33) in einer Softstartstellung positionierbar ist, in der er den Softstartkanal (2) mit dem gleichzeitig vom Primärkanal (4) abgetrennten Sekundärkanal (19) verbindet.

3. Ventileinrichtung nach einem der Ansprüche 1 oder 2, **dadurch gekennzeichnet, dass** der Steuerschieber (33) in einer Arbeitsstellung positionierbar ist, in der er den Sekundärkanal (1) mit dem Primärkanal (4) verbindet.

4. Ventileinrichtung nach Anspruch 3, **dadurch gekennzeichnet, dass** der Steuerschieber (33) in seiner Arbeitsstellung den Sekundärkanal (1) sowohl mit dem Primärkanal (4) als auch mit dem Softstartkanal (2) verbindet.

5. Ventileinrichtung nach einem der Ansprüche 1 bis 4, **dadurch gekennzeichnet, dass** die in der Entlüftungsstellung vorhandene Verbindung zwischen dem Sekundärkanal (1) und dem Entlüftungskanal (3) durch einen den Steuerschieber (33) durchsetzenden Übertrittskanal (53) hindurch erfolgt.

6. Ventileinrichtung nach Anspruch 5, **dadurch gekennzeichnet, dass** dem Übertrittskanal (53) ein im Steuerschieber (33) angeordnetes Ventilglied (46) zugeordnet ist, das in der Lage ist, den Übertrittskanal (53) in der Entlüftungsstellung des Steuerschiebers (33) freizugeben und in den anderen Stellungen des Steuerschiebers (33) zu verschließen.

7. Ventileinrichtung nach Anspruch 6, **dadurch gekennzeichnet, dass** das Ventilglied (46) kolbenartig ausgebildet ist und ständig dem in einer zum Umschalten des Steuerschiebers (33) mit einem Vorsteuerdruck beaufschlagbaren Vorsteuerkammer (37) herrschenden Druck ausgesetzt ist, wobei es durch den Vorsteuerdruck gegen einen am Steuerschieber (33) angeordneten und insbesondere von einem Ventilsitz (48a) gebildeten Anschlag (48) drückbar ist, um **dadurch** eine Stellkraft auf den Steuerschieber (33) auszuüben.

8. Ventileinrichtung nach einem der Ansprüche 1 bis 7, **gekennzeichnet durch** einen mit mehreren Steuerventilen (8) ausgestatteten Fluidverteiler (7), der einen Verteiler-Speisekanal (12) und mindestens einen Verteiler-Entlüftungskanal (13) enthält, die jeweils mit den Steuerventilen (8) in Verbindung stehen, und der mit dem Softstartventil (21) bestückt ist, wobei der Verteiler-Speisekanal (12) mit dem Sekundärkanal (1) und der Primärkanal (4) und der Softstartkanal (2) mit je einem zur Außenfläche des Fluidverteilers (7) ausmündenden Verteiler-Versorgungskanal (22, 23) verbunden sind.

9. Ventileinrichtung nach Anspruch 8, **dadurch gekennzeichnet, dass** der Entlüftungskanal (3) des Softstartventils (21) mit einem Verteiler-Entlüftungskanal (13) verbunden ist.

10. Ventileinrichtung nach Anspruch 8 oder 9, **dadurch gekennzeichnet, dass** der Fluidverteiler (7) über eine Mehrzahl von Bestückungsflächen verfügt, von denen jeweils zwei den Fluidverteiler (7) durchsetzende Verteiler-Arbeitskanäle (15, 16) ausgehen und die zweckmäßigerweise zumindest teilweise wahlweise mit einem Steuerventil (8) oder mit einem Softstartventil (21) bestückbar sind, wobei die Verteiler-Arbeitskanäle (15, 16) im Falle der Bestückung der zugeordneten Bestückungsfläche mit einem Softstartventil (21) als die Verteiler-Versorgungskanäle (22, 23) nutzbar sind.

11. Ventileinrichtung nach einem der Ansprüche 8 bis 10, **dadurch gekennzeichnet, dass** dem mit dem Softstartkanal (2) kommunizierenden Verteiler-Versorgungskanal (22) in seinen Verlauf eingeschaltete oder ihm vor- oder nachgeschaltete Drosselmittel (35) zugeordnet sind.

12. Ventileinrichtung nach einem der Ansprüche 1 bis 11, **dadurch gekennzeichnet, dass** die Drosselmittel (35) hinsichtlich ihrer Drosselungsintensität einstellbar sind.

13. Ventileinrichtung nach einem der Ansprüche 1 bis 12, **dadurch gekennzeichnet, dass** die Betätigungsfläche (57) des Steuerschiebers (33) einen mit dem Softstartdruck beaufschlagbaren Betätigungsraum (66) begrenzt.

14. Ventileinrichtung nach Anspruch 13, **dadurch gekennzeichnet, dass** der Betätigungsraum (66) zumindest dann über mindestens einen Steuerkanal (67) mit dem Softstartkanal (2) und/oder dem Sekundärkanal (1) verbunden ist, wenn der Steuerschieber (33) seine den Softstartkanal (2) mit dem Sekundärkanal (1) verbindende Softstartstellung einnimmt.

15. Ventileinrichtung nach Anspruch 13 oder 14, **dadurch gekennzeichnet, dass** der Steuerkanal (67) zumindest abschnittsweise im Steuerschieber (33) verläuft und zweckmäßigerweise derart mit mindestens einer Steuerdruck-Abgriffsöffnung (68) an einer Stelle des Außenumfanges des Steuerschiebers (33) ausmündet, dass diese Steuerdruck-Abgriffsöffnung (68) sowohl in der den Sekundärkanal (1) mit dem Softstartkanal (2) verbindenden Softstartstellung als auch in der den Sekundärkanal (1) mit dem Primärkanal (4) verbindenden Arbeitsstellung mit dem Softstartkanal (2) oder dem Sekundärkanal (1) kommuniziert.

16. Ventileinrichtung nach einem der Ansprüche 13 bis 15, **dadurch gekennzeichnet, dass** der Betätigungsraum (66) auf der der Betätigungsfläche (57) gegenüberliegenden Seite von einem sowohl bezüglich dem Steuerschieber (33) als auch bezüglich dem Ventilgehäuse (24) in der Achsrichtung des Steuerschiebers (33) verstellbaren Anschlagkolben (46) begrenzt ist, der durch den sich in die Softstartstellung verlagernden Steuerschieber (33) in eine sich gehäusefest abstützende und gleichzeitig die Softstartstellung des Steuerschiebers (33) vorgebende Anschlagposition verstellbar ist und der über Anschlagmittel (72, 73) derart mit dem Steuerschieber (33) zusammenwirkt, dass er dessen durch eine Druckerhöhung im Betätigungsraum (66) hervorgerufene Umschaltbewegung bei Erreichen der Arbeitsstellung stoppt.

17. Ventileinrichtung nach Anspruch 16, **dadurch gekennzeichnet, dass** der Anschlagkolben (64) durch Beaufschlagungsmittel (77) in Richtung zum Steuerschieber (33) vorgespannt oder vorspannbar ist, wobei die Beaufschlagungsmittel (77) zweckmäßigerweise von einer sich am Ventilgehäuse (24) abstützenden Federeinrichtung (82) gebildet sind, die komprimiert wird, wenn der Anschlagkolben (64) in die Anschlagposition verlagert wird.

18. Ventileinrichtung nach Anspruch 16 oder 17, **dadurch gekennzeichnet, dass** an dem Anschlagkolben (64) ein koaxial in den Steuerschieber (33) eintauchender Kolbenfortsatz (74) angeordnet ist, dem zweckmäßigerweise die Anschlagmittel (72, 73) zugeordnet sind.

19. Ventileinrichtung nach einem der Ansprüche 1 bis 18, **dadurch gekennzeichnet, dass** der Steuerschieber (33) mit einem stirnseitigen Endabschnitt (36) in eine Vorsteuerkammer (37) eintaucht, die mit einem Vorsteuerdruck beaufschlagbar ist, um die Vorspannkraft (86) hervorzurufen, wobei die Vorsteuerkammer (37) zweckmäßigerweise dem der Betätigungsfläche (57) entgegengesetzten stirnseitigen Endabschnitt (36) des Steuerschiebers (33) zugeordnet ist.

## Claims

1. Valve unit with soft start function, with a soft-start valve (21) which has main valve means (25) which are able either to shut off the connection between a primary passage (4) supplied with primary pressure and a secondary passage (1), into a closed position biased by a preload force (86), or alternatively to release into an open position, wherein the main valve means (25) may be pressurised to switch into the open position with a soft start pressure and the soft-start valve (21) is also able to connect the secondary passage (1), with the primary passage (4) isolated, to a soft-start passage (2) which on account of restrictor means (35) is or may be supplied with the soft start pressure which is at least initially lower than the primary pressure, and wherein the main valve means (25) contain a control slide (33) which may be set in several positions and is able to control the connection of the secondary passage (1) with both the soft-start passage (2) and also the primary passage (4), **characterised in that** the control slide (33) is movement-coupled to an actuating surface (57) which may be pressure-loaded by the soft start pressure opposite to the preload force (86) also acting upon it, and that the control slide (33) may be positioned in a venting position in which it connects the secondary passage (1), with simultaneous isolation of the primary passage (4) and the soft-start passage (2), to a vent passage (3) communicating with the atmosphere.

2. Valve unit according to claim 1, **characterised in that** the control slide (33) may be positioned in a soft start position in which it connects the soft-start passage (2) with the secondary passage (19) which is simultaneously isolated from the primary passage (4).

3. Valve unit according to any of claims 1 or 2, **characterised in that** the control slide (33) may be positioned in an operating position in which it connects the secondary passage (1) with the primary passage (4).

4. Valve unit according to claim 3, **characterised in that** the control slide (33) in its operating position connects the secondary passage (1) with both the primary passage (4) and also the soft-start passage (2).

5. Valve unit according to any of claims 1 to 4, **characterised in that** the connection provided in the venting position between the secondary passage (1) and the vent passage (3) is effected through an overflow passage (53) which passes through the control slide (33).

6. Valve unit according to claim 5, **characterised in that** the overflow passage (53) is assigned a valve member (46) located in the control slide (33) and which is able to open the overflow passage (53) in the venting position of the control slide (33) and to close it in the other positions of the control slide (33).

7. Valve unit according to claim 6, **characterised in that** the valve member (46) is in the form of a piston and is constantly under the pressure prevailing in a pilot chamber (37) which may be supplied with a pilot pressure for switching the control slide (33), wherein it may be pressed by the pilot pressure against a stop (48) provided on the control slide (33) and in particular formed by a valve seat (48a), so as to exert a control force on the control slide (33).

8. Valve unit according to any of claims 1 to 7, **characterised by** a fluid distributor (7) equipped with several control valves (8) and containing a distributor feed passage (12) and at least one distributor vent passage (13), each connected to the control valves (8), and which is equipped with the soft-start valve (21), wherein the distributor feed passage (12) is connected to the secondary passage (1), and the primary passage (4) and the soft-start passage (2) are each connected to a distributor supply passage (22, 23) leading to the outer surface of the fluid distributor (7).

9. Valve unit according to claim 8, **characterised in that** the vent passage (3) of the soft-start valve (21) is connected to a distributor vent passage (13).

10. Valve unit according to claim 8 or 9, **characterised in that** the fluid distributor (7) has a multiplicity of mounting faces, from each of which lead two distributor operating passages (15, 16) which pass through the fluid distributor (7) and which may be equipped expediently at least partly with a control valve (8) or a soft-start valve (21), wherein the distributor operating passages (15, 16) may also be used as the distributor supply passages (22, 23) when the assigned mounting face is equipped with a soft-start valve (21).

11. Valve unit according to any of claims 8 to 10, **characterised in that** the distributor supply passage (22) communicating with the soft-start passage (2) is assigned restrictor means (35) inserted in its course or upstream or downstream of it.

12. Valve unit according to any of claims 1 to 11, **characterised in that** the restrictor means (35) have adjustable restriction intensity.

13. Valve unit according to any of claims 1 to 12, **characterised in that** the actuating surface (57) of the control slide (33) bounds an actuating chamber (66) which may be supplied with soft start pressure.

14. Valve unit according to claim 13, **characterised in that** the actuating chamber (66) is connected to the soft-start passage (2) and/or the secondary passage (1) via at least one control passage (67), at least when the control slide (33) assumes its soft start position connecting the soft-start passage (2) with the secondary passage (1).

15. Valve unit according to claim 13 or 14, **characterised in that** at least sections of the control passage (67) run in the control slide (33) and expediently emerge with at least one control pressure tap orifice (68) at a point on the outer periphery of the control slide (33) in such a way that this control pressure tap orifice (68) communicates with the soft-start passage (2) or the secondary passage (1) in both the soft start position connecting the secondary passage (1) with the soft-start passage (2) and also in the operating position connecting the secondary passage (1) with the primary passage (4).

16. Valve unit according to any of claims 13 to 15, **characterised in that** the actuating chamber (66) is bounded on the side opposite the actuating surface (57) by a stop piston (46) which is adjustable in the axial direction of the control slide (33) both in respect of the control slide (33) and also in respect of the valve casing (24) and which is adjustable, by means of the control slide (33) shifting into the soft start position, into a stop position resting immovably on the casing and simultaneously presetting the soft start position of the control slide (33), and interacting with the control slide (33) via stop means (72, 73) in such a way that it stops its switching movement, generated by a rise in pressure in the actuating chamber (66), on reaching the operating position.

17. Valve unit according to claim 16, **characterised in that** the stop piston (64) is or may be biased by pressurising means (77) in the direction of the control slide (33), wherein the pressurising means (77) are formed expediently by a spring device (82) resting on the valve casing (24) and which is compressed when the stop piston (64) is shifted into the stop position.

18. Valve unit according to claim 16 or 17 **characterised in that** a piston extension (74), to which the stop means (72, 73) are expediently assigned and which dips coaxially into the control slide (33), is fitted on to the stop piston (64).

19. Valve unit according to any of claims 1 to 18, **characterised in that** an end section (36) on the end face of the control slide (33) dips into a pilot chamber (37) which may be supplied with a pilot pressure to generate the preload force (86), wherein the pilot chamber (37) is expediently assigned to the end section (36) on the end face of the control slide (33) opposite the actuating surface (57).

## Revendications

1. Ensemble distributeur à fonction de mise en pression progressive, équipé d'une soupape à mise en pression progressive (21) pourvue d'éléments de distribution principale (25) aptes soit à interrompre la liaison entre un canal primaire (4) soumis à une pression primaire et un canal secondaire (1) dans une position de fermeture précontrainte par un effort de précontrainte (86), soit à établir celle-ci dans une position d'ouverture, les éléments de distribution principale (25) pouvant être soumis à une pression progressive pour commutation en position d'ouverture et la soupape à mise en pression progressive (21) étant en outre apte, lorsque le canal primaire (4) est séparé, à relier le canal secondaire (1) à un canal de mise en pression progressive (2) soumis ou pouvant être soumis à une pression progressive au moins initialement plus faible que la pression primaire du fait de moyens d'étranglement (35), et les éléments de distribution principale (25) contenant un tiroir de commande (33) pouvant être placé dans différentes positions et apte à commander la liaison du canal secondaire (1) tant avec le canal de mise en pression progressive (2) qu'avec le canal primaire (4), **caractérisé en ce que** le tiroir de commande (33) est solidaire en mouvement avec une surface d'actionnement (57) pouvant être soumise à la pression progressive dans le sens contraire à l'effort de précontrainte (86) qui s'exerce également sur lui, et **en ce que** le tiroir de commande (33) peut être placé dans une position de purge d'air, où il relie le canal secondaire (1) à un canal de purge d'air (3) communiquant avec l'atmosphère, en cas de séparation simultanée d'avec le canal primaire (4) et le canal de mise en pression progressive (2).

2. Ensemble distributeur selon la revendication 1, **caractérisé en ce que** le tiroir de commande (33) peut être placé dans une position de mise en pression progressive, où il relie le canal de mise en pression progressive (2) au canal secondaire (19) simultanément séparé du canal primaire (4).

3. Ensemble distributeur selon l'une des revendications 1 ou 2, **caractérisé en ce que** le tiroir de commande (33) peut être placé dans une position de travail, où il relie le canal secondaire (1) au canal primaire (4).

4. Ensemble distributeur selon la revendication 3, **caractérisé en ce que,** dans sa position de travail, le tiroir de commande (33) relie le canal secondaire (1) tant au canal primaire (4) qu'au canal de mise en pression progressive (2).

5. Ensemble distributeur selon l'un des revendications 1 à 4, **caractérisé en ce que** la liaison existant en position de purge d'air entre le canal secondaire (1) et le canal de purge d'air (3) est réalisée par un canal de passage (53) traversant le tiroir de commande (33).

6. Ensemble distributeur selon la revendication 5, **caractérisé en ce qu'**au canal de passage (53) est affecté un organe de soupape (46) disposé dans le tiroir de commande (33) et apte à ouvrir le canal de passage (53) dans la position de purge d'air du tiroir de commande (33) et à le fermer dans les autres positions du tiroir de commande (33).

7. Ensemble distributeur selon la revendication 6, **caractérisé en ce que** l'organe de soupape (46) est réalisé en forme de piston et constamment soumis à la pression régnant dans un compartiment pilote (37) où peut être appliquée une pression pilote pour la commutation du tiroir de commande (33) et peut être serré par la pression pilote contre une butée (48) disposée sur le tiroir de commande (33) et notamment formée par un siège de soupape (48a), pour exercer ainsi un effort de réglage sur le tiroir de commande (33).

8. Ensemble distributeur selon l'une des revendications 1 à 7, **caractérisé par** un distributeur de fluide (7) pourvu de plusieurs soupapes pilotes (8), qui comprend un canal d'alimentation du distributeur (12) et au moins un canal de purge d'air du distributeur (13), lesquels sont respectivement reliés aux soupapes pilotes (8), et qui est équipé de la soupape à mise en pression progressive (21), le canal d'alimentation du distributeur (12) étant relié au canal secondaire (1), et le canal primaire (4) et le canal de mise en pression progressive (2) respectivement à un canal d'approvisionnement du distributeur (22, 23) débouchant sur la surface extérieure du distributeur de fluide (7).

9. Ensemble distributeur selon la revendication 8, **caractérisé en ce que** le canal de purge d'air (3) de la soupape à mise en pression progressive (21) est relié à un canal de purge d'air du distributeur (13).

10. Ensemble distributeur selon la revendication 8 ou la revendication 9, **caractérisé en ce que** le distributeur de fluide (7) dispose d'une pluralité de surfaces d'équipement, desquelles partent deux canaux de travail du distributeur (15, 16) traversant le distributeur de fluide (7) et qui sont fonctionnellement au moins partiellement équipables en option d'une soupape pilote (8) ou d'une soupape à mise en pression progressive (21), les canaux de travail du distributeur (15, 16) étant utilisables comme canaux d'approvisionnement du distributeur (22, 23) en cas d'équipement de la surface d'équipement correspondante avec une soupape à mise en pression progressive (21).

11. Ensemble distributeur selon l'une des revendications 8 à 10, **caractérisé en ce qu'**au canal d'approvisionnement du distributeur (22) communiquant avec le canal de mise en pression progressive (2) sont affectés des moyens d'étranglement (35) montés sur son parcours, ou montés en amont ou en aval de celui-ci.

12. Ensemble distributeur selon l'une des revendications 1 à 11, **caractérisé en ce que** l'intensité d'étranglement des moyens d'étranglement (35) est réglable.

13. Ensemble distributeur selon l'une des revendications 1 à 12, **caractérisé en ce que** la surface d'actionnement (57) du tiroir de commande (33) délimite un espace d'actionnement (66) pouvant être soumis à la pression progressive.

14. Ensemble distributeur selon la revendication 13, **caractérisé en ce que** l'espace d'actionnement (66) est relié au canal de mise en pression progressive (2) et/ou au canal secondaire (1) par au moins un canal de commande (67), au moins lorsque le tiroir de commande (33) occupe sa position de mise en pression progressive reliant le canal de mise en pression progressive (2) au canal secondaire (1).

15. Ensemble distributeur selon la revendication 13 ou la revendication 14, **caractérisé en ce que** le canal de commande (67) s'étend au moins partiellement dans le tiroir de commande (33) et débouche fonctionnellement par au moins une ouverture de saisie de pression de commande (68) à un emplacement sur la périphérie extérieure du tiroir de commande (33), de telle manière que ladite ouverture de saisie de pression de commande (68) communique avec le canal de mise en pression progressive (2) ou le canal secondaire (1) tant en position de mise en pression progressive reliant le canal secondaire (1) au canal de mise en pression progressive (2) qu'en position de travail reliant le canal secondaire (1) au canal primaire (4).

16. Ensemble distributeur selon l'une des revendications 13 à 15, **caractérisé en ce que** l'espace d'actionnement (66) est délimité sur le côté opposé à la surface d'actionnement (57) par un piston de butée (46) réglable en direction axiale du tiroir de commande (33) tant par rapport au tiroir de commande (33) qu'au carter de soupape (24), et réglable, par le tiroir de commande (33) se déplaçant vers la position de mise en pression progressive, dans une position de butée à appui fixe sur le carter qui définit simultanément la position de mise en pression progressive du tiroir de commande (33), ledit piston de butée coopérant avec le tiroir de commande (33) par des éléments de butée (72, 73) de manière à arrêter le mouvement de commutation de celui-ci consécutif à une élévation de pression dans l'espace d'actionnement (66) une fois la position de travail atteinte.

17. Ensemble distributeur selon la revendication 16, **caractérisé en ce que** le piston de butée (64) est précontraint ou peut être précontraint par des moyens de contrainte (77) dans la direction du tiroir de commande (33), lesdits moyens de contrainte (77) étant formés par un dispositif à ressort (82) s'appuyant contre le carter de soupape (24) et qui est comprimé lorsque le piston de butée (64) est déplacé en position de butée.

18. Ensemble distributeur selon la revendication 16 ou la revendication 17, **caractérisé en ce qu'**une extension de piston (74) à plongée coaxiale dans le tiroir de commande (33), à laquelle les éléments de butée (72, 73) sont fonctionnellement affectés, est disposée contre le piston de butée (64).

19. Ensemble distributeur selon l'une des revendications 1 à 18, **caractérisé en ce que** le tiroir de commande (33) plonge par une section d'extrémité frontale (36) dans un compartiment pilote (37) pouvant être soumis à une pression pilote pour générer l'effort de précontrainte (86), ledit compartiment pilote (37) étant fonctionnellement affecté à la section d'extrémité frontale (36) du tiroir de commande (33) opposée à la surface d'actionnement (57).
